# EUROPÄISCHE PATENTSCHRIFT

(11) **EP 2 619 467 B1**
(45) Veröffentlichungstag und Bekanntmachung des Hinweises auf die Patenterteilung: **27.02.2019**
(21) Anmeldenummer: 11749403.9
(22) Anmeldetag: 25.08.2011
(51) Int. Cl.: F16C 11/06

(54) **KUGELGELENK**
BALL JOINT
JOINT À BILLE

(30) Priorität: 24.09.2010 DE 102010041304
(43) Veröffentlichungstag der Anmeldung: 31.07.2013
(73) Patentinhaber: ZF Friedrichshafen AG, 88046 Friedrichshafen (DE)
(72) Erfinder: NACHBAR, Frank, 49448 Lemfoerde (DE); GRUBE, Volker, 49356 Diepholz (DE); GRONEWEG, Cord, 49448 Lemfoerde (DE); HODDE, Tobias, 32351 Stemwede (DE)
(86) Internationale Anmeldenummer: PCT/EP2011/064590
(87) Internationale Veröffentlichungsnummer: WO 2012/038181

(56) Entgegenhaltungen:
- EP-A1- 1 077 334
- DE-A1-102004 061 057
- DE-U1- 29 819 487

## Beschreibung

Die Erfindung betrifft ein Kugelgelenk mit einem einen balligen Lagerbereich aufweisenden Kugelzapfen, der mittels des Lagerbereichs gleitbeweglich in einer Kugelschale gelagert und mit dieser in einer Öffnung einer Halterung angeordnet ist, einem durch Umspritzen der Kugelschale und der Halterung mit einem verfestigbaren Material gebildeten festen Körper, aus welchem sich der Kugelzapfen in einer axialen Richtung heraus erstreckt, und einer in dem festen Körper vorgesehenen, die Kugelschale axial überdeckenden und von dem Material umspritzten Axialsicherung für den Kugelzapfen.

Ein gattungsgemäßes Kugelgelenk ist z.B. aus der DE 10 2004 061 057 A1 vorbekannt.

Der Aufbau und die Montage von als Radialgelenke ausgebildeten Kugelgelenken basieren auf dem Erstellen und Fügen von Einzelteilen (Kugelzapfen, Kugelschale, Gehäuse, Dichtungsbalg usw.) in einzelnen Prozessen und Fertigungsschritten. Die Gesamtfunktion und Eigenschaft des Radialgelenks wird durch die jeweilige Toleranzlage der Einzelteile bestimmt und durch nachfolgende Prozesse (Tempern, Schleifen etc.) optimiert, um Kundenforderungen einzuhalten.

Die EP 0 927 310 B1 offenbart ein Kugelgelenk mit einem

Kugelgelenkgehäuse, welches einen rohrförmigen Wandteil aufweist, der sich im Wesentlichen koaxial zu dem die Kugel tragenden, nach außen abstehenden Kugelzapfen erstreckt und die Kugel mit Abstand umgibt und wobei bei eingesetzter Kugel ein Gehäusematerial den zwischen dem Wandteil und der Kugel gebildeten Freiraum ausfüllt und die Kugel derart umgibt, dass diese in einer Aussparung, die die Kugel um mehr als ihre Halbschale umgibt, im Gehäusematerial rotationsbeweglich gelagert ist. Der rohrförmige Wandteil besteht aus einem Rohrprofilabschnitt mit nach innen und/oder außen weisenden Verankerungselementen, wobei das eingegossene oder eingespritzte Gehäusematerial lediglich den Freiraum zwischen dem Rohrprofilabschnitt und der Kugel ausfüllt und sich über die ganze Länge des Rohrprofilabschnitts, jedoch nicht darüber hinaus erstreckt, sodass der den ringförmigen Wandteil bildende Rohrprofilabschnitt die gesamte radiale Außenwand des Kugelgelenkgehäuses bildet. Ferner ist zwischen der Aussparung und der Kugel eine Lager-Zwischenschicht vorgesehen.

Dieses Kugelgelenk weist bei höheren axialen Belastungen eine unzureichende Ausreißfestigkeit auf.

Ausgehend hiervon liegt der Erfindung die Aufgabe zugrunde, ein Kugelgelenk der eingangs genannten Art mit einer relativ hohen Ausreißfestigkeit zu schaffen.

Diese Aufgabe wird erfindungsgemäß mit einem Kugelgelenk nach Anspruch 1 gelöst. Bevorzugte Weiterbildungen der Erfindung sind in den Unteransprüchen gegeben.

Das erfindungsgemäße Kugelgelenk, insbesondere für ein Kraftfahrzeug, umfasst einen einen balligen Lagerbereich aufweisenden Kugelzapfen, der mittels des Lagerbereichs gleitbeweglich in einer Kugelschale gelagert und mit dieser in einer Öffnung einer Halterung angeordnet ist, einen durch Umspritzen der Kugelschale und der Halterung mit einem verfestigbaren Material gebildeten festen Körper, aus welchem sich der Kugelzapfen in einer axialen Richtung heraus erstreckt, und eine in dem festen Körper vorgesehene, die Kugelschale axial überdeckende und von dem Material umspritzte Axialsicherung für den Kugelzapfen. Erfindungsgemäß ist die Axialsicherung durch die Kugelschale axial überdeckende Randabschnitte der Halterung gebildet, wobei die von der Halterung abgebogenen Randabschnitte sich abwechselnd in einander entgegengesetzte Richtungen erstrecken.

Durch die in den festen Körper durch Umspritzen integrierte und die Kugelschale überdeckende Axialsicherung ist die Ausreißfestigkeit des Kugelgelenks erhöht.

Insbesondere sind die Randabschnitte gegenüber der axialen Richtung geneigt und überdecken dabei bevorzugt mit ihren freien Enden die Kugelschale axial. Dennoch verlaufen die Randabschnitte vorzugsweise im Wesentlichen in axialer Richtung. Die Randabschnitte können als separate Bauteile gefertigt und an der Halterung befestigt sein. Bevorzugt bilden die Randabschnitte aber mit der Halterung eine Materialeinheit.

Gemäß einer nicht erfindungsgemäßen Alternative ist die Axialsicherung durch einen topfförmigen Behälter gebildet, in welchem der Kugelzapfen mit der Kugelschale sitzt. Dabei erstreckt sich der Kugelzapfen insbesondere durch eine Behälteröffnung aus dem Behälter heraus, vorzugsweise in axialer Richtung. Bevorzugt ist der die Behälteröffnung begrenzende Rand des Behälters zumindest bereichsweise radial nach innen in Richtung Kugelzapfen gebogen, sodass der Rand die Kugelschale axial überdeckt.

Der Behälter erstreckt sich bevorzugt durch die Öffnung der Halterung hindurch. Insbesondere ist der Behälter durch den festen Körper an der Halterung axial gesichert. Vorzugsweise weist der Behälter, insbesondere auf einer der Behälteröffnung abgewandten Seite der Halterung, einen umlaufenden, radialen Vorsprung auf, dessen Außendurchmesser größer als der Durchmesser der Öffnung der Halterung ist. Hierdurch ist der Behälter zusätzlich axial an der Halterung gesichert.

Gemäß einer Weiterbildung umfasst der feste Körper einen beim Spritzen des Materials gebildeten Befestigungsansatz mit einer Ringnut, an der ein Dichtungsbalg festlegbar oder festgelegt ist. Der Dichtungsbalg erstreckt sich bevorzugt bis zum Kugelzapfen, insbesondere bis zu einem Zapfenbereich des Kugelzapfens.

Die Kugelschale kann an den Lagerbereich angespritzt sein. Bevorzugt ist die Kugelschale aber als separates Bauteil ausgebildet und insbesondere auf den Lagerbereich aufgeschnappt.

Der Kugelzapfen und/oder die Halterung bestehen bevorzugt jeweils aus Metall, insbesondere aus Stahl. Beispielsweise besteht die Halterung aus Blech. Die Kugelschale besteht insbesondere aus Kunststoff, vorzugsweise aus Polyoxymethylen (POM). Der Behälter, sofern vorhanden, besteht bevorzugt aus Metall, insbesondere aus Stahl. Das verfestigbare Material besteht z.B. aus Kunststoff oder aus Metall. Insbesondere besteht das verfestigbare Material aus Zink, aus Aluminium, aus Magnesium oder aus faserverstärktem Polyamid, wie z.B. aus PA66 GF30.

Der Lagerbereich weist eine vorzugsweise kugelförmige Lagerfläche auf, die an einer vorzugsweise hohlkugelförmigen Lagerfläche der Kugelschale anliegt. Der Kugelzapfen umfasst insbesondere einen sich an den Lagerbereich anschließenden Zapfenbereich, der aus der Kugelschale, aus dem festen Körper und, sofern vorhanden, aus dem Behälter herausragt.

Die Halterung umringt den Lagerbereich insbesondere auf Höhe seines Äquators, sodass radiale Kräfte gut zwischen Kugelzapfen und Halterung übertragen werden können. Bevorzugt umfasst die Halterung einen die Öffnung der Halterung umgebenden ringförmigen Abschnitt, der vorzugsweise flach ausgebildet ist. Die Halterung bildet bevorzugt ein Fahrwerksbauteil oder einen Teil desselben. Das Fahrwerksbauteil ist z.B. ein Lenker oder Radträger.

Das erfindungsgemäße Kugelgelenk ist insbesondere als Radialgelenk ausgebildet und umfasst bevorzugt eine reduzierte Anzahl an Bauteilen. Insbesondere ist das erfindungsgemäße Kugelgelenk mit einer reduzierten Anzahl von Montageprozessen herstellbar. Durch das Fügen des vormontierten Kugelzapfens mit Kugelschale und Gehäuse mittels Einspritzprozess (Kunststoff, Zink, Al, Mg etc.) wird das Kugelgelenk vorzugsweise als Gelenkkartusche komplettiert. Unter dem Begriff "Gehäuse" ist insbesondere die Halterung oder die aus Halterung und Behälter gebildete Baugruppe zu verstehen. Nachfolgend wird das Kugelgelenk durch die Montage des den Dichtungsbalg umfassenden Dichtsystems vervollständigt. Das Gehäuse ist zur Verbesserung der Kraftübertragung insbesondere derart ausgeführt, dass die Kugelschale und/oder die aus Kugelzapfen und Kugelschale gebildete Baugruppe in axialer und radialer Richtung abgestützt ist. Die Ausbildung der Aufnahme des Dichtsystems erfolgt entweder durch das Gehäuse und/oder ganz oder teilweise durch das injizierte Material, vorzugsweise in Form des Befestigungsansatzes. Bevorzugt umfasst das Gehäuse die Axialsicherung. Je nach Betrachtungsweise kann das Gehäuse auch den festen Körper umfassen.

Das erfindungsgemäße Kugelgelenk ist bei gängigen radial belasteten Produkten bzw. Fahrwerkkomponenten einsetzbar, z.B. als Flanschgelenk, als Lenkergelenk oder als Außengelenk. Die Leistungseigenschaft kann durch Zusatzelemente (z.B.: Erhöhung der Ausziehkraft) verbessert werden. Eine Verstärkung/Erhöhung der Leistungsfähigkeit in axialer und radialer Belastungsrichtung kann z.B. durch den Einsatz des Behälters realisiert werden.

Insbesondere ergeben sich folgende Vorteile:
- Ein Tempern ist nicht erforderlich, da sich durch den Injektionsprozess der eingespritze Werkstoff (verfestigbares Material) den Ist-Maßen anpasst.
- Reduzierte Anzahl an Bauteilen.
- Reduzierte Anzahl an Montageprozessen.
- Gutes Lösemoment-zu-Reibmoment-Verhältnis durch Einsatz bekannter Systeme (POM-Kugelschale, Fett) und optimierter Vorspannung.

Die Erfindung wird nachfolgend anhand bevorzugter Ausführungsformen unter Bezugnahme auf die Zeichnung beschrieben. In der Zeichnung zeigen:
- Fig. 1: eine teilweise perspektivische Darstellung eines Kugelgelenks gemäß einer ersten Ausführungsform der Erfindung,
- Fig. 2: eine Draufsicht auf das Kugelgelenk nach Fig. 1,
- Fig. 3: eine andere perspektivische und teilweise aufgebrochene Darstellung des Kugelgelenks nach Fig. 1,
- Fig. 4: eine Seitenansicht eines Kugelgelenks gemäß einer nicht erfindungsgemäßen Ausführungsform.

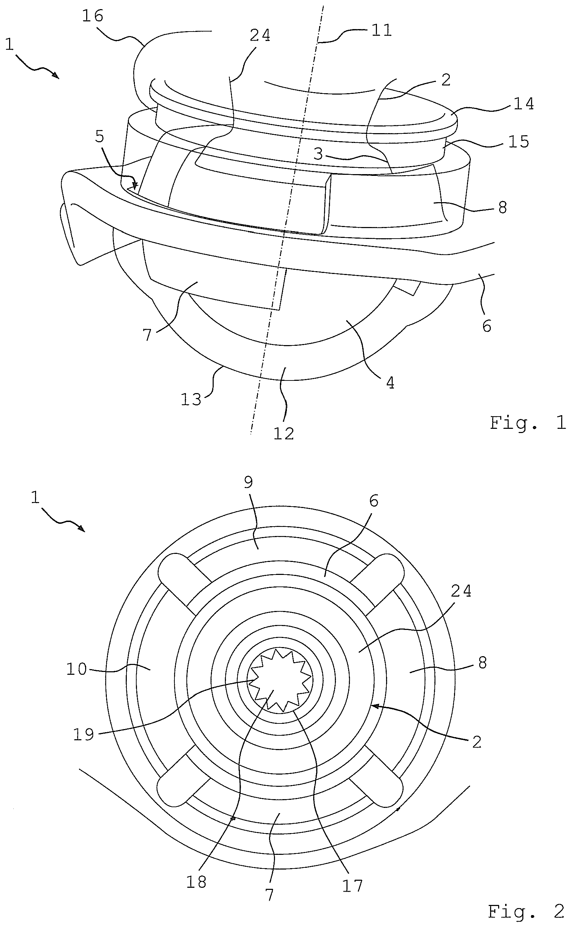

Aus den Fig. 1 bis 3 sind unterschiedliche Ansichten eines Kugelgelenks 1 gemäß einer Ausführungsform der Erfindung ersichtlich, welches einen Kugelzapfen 2 mit einem auch als Gelenkkugel bezeichneten balligen Lagerbereich 3 umfasst, der gleitbeweglich in einer Kugelschale 4 gelagert ist. Der Kugelzapfen 2 sitzt drehbar und schwenkbar in der Kugelschale 4, die in einer durchgehenden Öffnung 5 einer Halterung 6 angeordnet ist. Die Halterung 6 umringt den unausgelenkten Kugelzapfen 2 auf Höhe des Äquators der Gelenkkugel 3, sodass die Halterung 6 in den Kugelzapfen 2 eingeleitete radiale Kräfte aufnehmen kann. Von der Halterung 6 sind Randabschnitte 7, 8, 9 und 10 abgebogen, welche gegenüber der axialen Richtung 11 geneigt verlaufen und mit ihren freien Enden die Kugelschale 4 axial überdecken. Dabei sind die Randabschnitte abwechselnd in einander entgegengesetzte Richtungen abgebogen, wobei sich gemäß der Darstellung die Randabschnitte 8 und 10 nach oben und die Randabschnitte 7 und 9 nach unten erstrecken. Die Randabschnitte oder zumindest zwei einander gegenüberliegende der Randabschnitte verlaufen vor dem Einsetzen der aus Kugelschale 4 und Kugelzapfen 2 gebildeten Baugruppe in die Öffnung 5 in axialer Richtung 11 und werden erst nach dem Einsetzen der Baugruppe in die Öffnung 5 in Richtung Kugelzapfen 2 radial nach innen geneigt, um die Baugruppe axial an der Halterung 6 zu sichern.

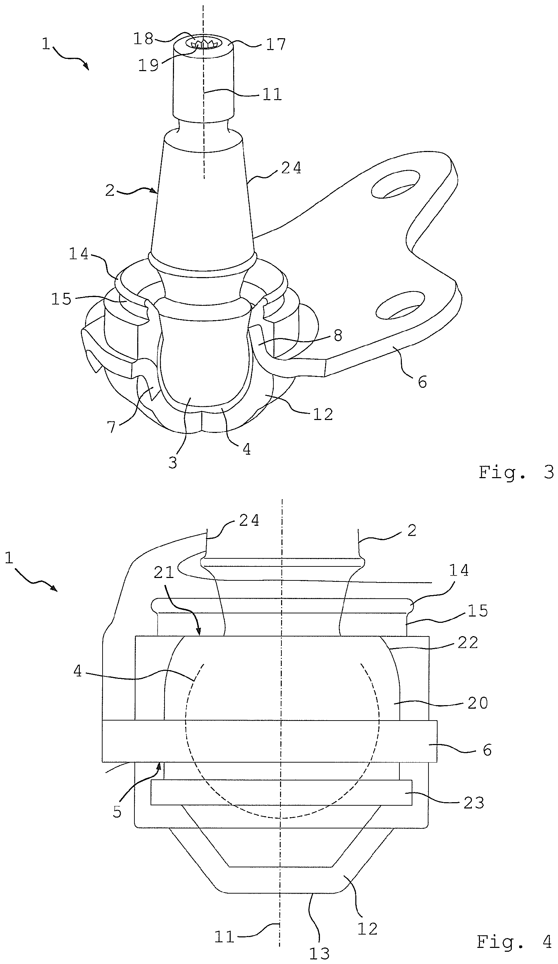

Die aus Kugelzapfen 2, Kugelschale 4 und Halterung 6 gebildete Anordnung wird nun mit einem verfestigbaren Material umspritzt, welches nach seiner Verfestigung einen festen Körper 12 bildet, der in Fig. 1 transparent dargestellt und nur durch seine Konturlinien 13 angedeutet ist. Der feste Körper 12 umfasst einen Befestigungsansatz 14 mit einer Ringnut 15, an der ein schematisch angedeuteter Dichtungsbalg 16 festgelegt ist, der sich bis zu einem Zapfenbereich 24 des Kugelzapfens 2 hin erstreckt. Aus Fig. 2 ist ferner ersichtlich, dass der Kugelzapfen 2 an seinem freien Ende 17 mit einer Ausnehmung 18 versehen ist, in welche eine Schlüsselfläche 19 eingebracht ist (in den Fig. 2 und 3 ist der Dichtungsbalg weggelassen).

Aus Fig. 4 ist eine Seitenansicht eines Kugelgelenks 1 gemäß einer nicht erfindungsgemäßen Ausführungsform ersichtlich, wobei zu der erfindungsgemäßen Ausführungsform ähnliche oder identische Merkmale mit denselben Bezugszeichen wie bei der erfindungsgemäßen Ausführungsform bezeichnet sind. Der Kugelzapfen 2 ist in einer Kugelschale 4 gleitbeweglich gelagert, die in einem topfförmigen Behälter 20 angeordnet ist, der eine Behälteröffnung 21 aufweist, durch welche sich der Kugelzapfen 2 aus dem Behälter 20 heraus erstreckt. Der die Behälteröffnung 21 begrenzende Rand 22 des Behälters 20 ist radial nach innen umgebogen und sichert somit die aus Kugelzapfen 2 und Kugelschale 4 gebildete Baugruppe in axialer Richtung 11. Der Behälter 20 erstreckt sich durch eine durchgehende Öffnung 5 einer Halterung 6 hindurch und weist auf einer der Behälteröffnung 21 abgewandten Seite der Halterung 6 einen umlaufenden radialen Vorsprung 23 auf, dessen Außendurchmesser größer als der Durchmesser der Öffnung 5 ist.

Die aus dem Kugelzapfen 2, der Kugelschale 4, dem Behälter 20 und der Halterung 6 gebildete Anordnung wird mit einem verfestigbaren Material umspritzt, welches nach seiner Verfestigung einen festen Körper 12 bildet, der in Fig. 4 transparent dargestellt und lediglich durch seine Konturlinien 13 angedeutet ist. Der feste Körper 12 umfasst einen Befestigungsansatz 14 mit einer Ringnut 15, an der ein sich bis zu einem Zapfenbereich 24 des Kugelzapfens 2 hin erstreckender Dichtungsbalg festlegbar ist.

### Bezugszeichenliste

- 1: Kugelgelenk
- 2: Kugelzapfen
- 3: Lagerbereich des Kugelzapfens / Gelenkkugel
- 4: Kugelschale
- 5: durchgehende Öffnung in Halterung
- 6: Halterung
- 7: Randabschnitt
- 8: Randabschnitt
- 9: Randabschnitt
- 10: Randabschnitt
- 11: axiale Richtung des Kugelgelenks
- 12: fester Körper
- 13: Konturlinie des festen Körpers
- 14: Befestigungsansatz
- 15: Ringnut
- 16: Dichtungsbalg
- 17: freies Ende des Kugelzapfens
- 18: Ausnehmung
- 19: Schlüsselfläche
- 20: Behälter
- 21: Behälteröffnung
- 22: Rand des Behälters
- 23: umlaufender radialer Vorsprung
- 24: Zapfenbereich des Kugelzapfens

## Patentansprüche

1. Kugelgelenk mit einem einen balligen Lagerbereich (3) aufweisenden Kugelzapfen (2), der mittels des Lagerbereichs (3) gleitbeweglich in einer Kugelschale (4) gelagert und mit dieser in einer Öffnung (5) einer Halterung (6) angeordnet ist, einem durch Umspritzen der Kugelschale (4) und der Halterung (6) mit einem verfestigbaren Material gebildeten festen Körper (12), aus welchem sich der Kugelzapfen (2) in einer axialen Richtung (11) heraus erstreckt,
und einer in dem festen Körper (12) vorgesehenen, die Kugelschale (4) axial überdeckenden und von dem Material umspritzten Axialsicherung für den Kugelzapfen (2), **dadurch gekennzeichnet, dass** die Axialsicherung durch die Kugelschale (4) axial überdeckende Randabschnitte (7, 8, 9, 10) der Halterung (6) gebildet ist, wobei die von der Halterung (6) abgebogenen Randabschnitte (7, 8, 9, 10) sich abwechselnd in einander entgegengesetzte Richtungen erstrecken.

2. Kugelgelenk nach Anspruch 1,
**dadurch gekennzeichnet, dass**
die Halterung (6) sich aus dem festen Körper (12) heraus erstreckt.

3. Kugelgelenk nach Anspruch 2,
**dadurch gekennzeichnet, dass**
die Randabschnitte (7, 8, 9, 10) mit der Halterung (6) eine Materialeinheit bilden.

4. Kugelgelenk nach Anspruch 2 oder 3,
**dadurch gekennzeichnet, dass**
die Randabschnitte (7, 8, 9, 10) gegenüber der axialen Richtung (11) geneigt sind und mit ihren freien Enden die Kugelschale (4) axial überdecken.

5. Kugelgelenk nach Anspruch 4,
**dadurch gekennzeichnet, dass**
die Halterung (6) aus Blech ausgebildet ist und einen die Öffnung (5) umgebenden, ringförmigen Abschnitt aufweist, der flach ausgebildet ist.

6. Kugelgelenk nach einem der vorangehenden Ansprüche,
**dadurch gekennzeichnet, dass**
der feste Körper (12) einen beim Spritzen des Materials gebildeten Befestigungsansatz (14) mit einer Ringnut (15) umfasst, an der ein Dichtungsbalg (16) festlegbar ist.

7. Kugelgelenk nach einem der vorangehenden Ansprüche,
**dadurch gekennzeichnet, dass**
die Kugelschale (4) auf den Lagerbereich (3) aufgeschnappt ist.

## Claims

1. Ball joint having a ball stud (2) which has a spherical bearing region (3), is mounted in a slidable manner by means of the bearing region (3) in a ball socket (4) and is arranged with the latter in an opening (5) in a holder (6), having a solid body (12) which is formed by encapsulating the ball socket (4) and the holder (6) with a solidifiable material and out of which the ball stud (2) extends in an axial direction (11),
and having an axial securing means for the ball stud (2), said axial securing means being provided in the solid body (12), axially covering the ball socket (4) and being encapsulated by the material, **characterized in that** the axial securing means is formed by peripheral portions (7, 8, 9, 10), axially covering the ball socket (4), of the holder (6), wherein the peripheral portions (7, 8, 9, 10) bent away from the holder (6) extend alternately in opposite directions.

2. Ball joint according to Claim 1,
**characterized in that**
the holder (6) extends out of the solid body (12).

3. Ball joint according to Claim 2,
**characterized in that**
the peripheral portions (7, 8, 9, 10) form a material unit with the holder (6).

4. Ball joint according to Claim 2 or 3,
**characterized in that**
the peripheral portions (7, 8, 9, 10) are inclined with respect to the axial direction (11) and axially cover the ball socket (4) with their free ends.

5. Ball joint according to Claim 4,
**characterized in that**
the holder (6) is made of sheet metal and has an annular portion which surrounds the opening (5) and is formed in a flat manner.

6. Ball joint according to one of the preceding claims,
**characterized in that**
the solid body (12) comprises a fastening attachment (14), formed during the injection of the material, having an annular groove (15) to which a sealing bellows (16) is fixable.

7. Ball joint according to one of the preceding claims,
**characterized in that**
the ball socket (4) is snap-fastened onto the bearing region (3).

## Revendications

1. Joint à bille comprenant un pivot à rotule (2) présentant une région de palier bombée (3), lequel est supporté de manière déplaçable par coulissement au moyen de la région de palier (3) dans une coque sphérique (4) et est disposé avec celle-ci dans une ouverture (5) d'une pièce de retenue (6), un corps fixe (12) formé avec un matériau pouvant être solidifié par surmoulage de la coque sphérique (4) et de la pièce de retenue (6) hors daquel le pivot à rotule (2) s'étend dans une direction axiale (11),
et une fixation axiale pour le pivot à rotule (2) prévue dans le corps fixe (12), recouvrant axialement la coque sphérique (4) et surmoulée par le matériau,
**caractérisé en ce que** la fixation axiale est formée par des portions de bord (7, 8, 9, 10) de la pièce de retenue (6) recouvrant axialement la coque sphérique (4),
les portions de bord (7, 8, 9, 10) recourbées depuis la pièce de retenue (6) s'étendant en alternance dans des directions mutuellement opposées.

2. Joint à bille selon la revendication 1,
**caractérisé en ce que**
la pièce de retenue (6) s'étend hors du corps fixe (12) .

3. Joint à bille selon la revendication 2,
**caractérisé en ce que**
les portions de bord (7, 8, 9, 10) forment avec la pièce de retenue (6) une unité de matériau.

4. Joint à bille selon la revendication 2 ou 3,
**caractérisé en ce que**
les portions de bord (7, 8, 9, 10) sont inclinées par rapport à la direction axiale (11) et recouvrent axialement la coque sphérique (4) avec leurs extrémités libres.

5. Joint à bille selon la revendication 4,
**caractérisé en ce que**
la pièce de retenue (6) est réalisée en tôle et présente une portion annulaire entourant l'ouverture (5), qui est réalisée sous forme plate.

6. Joint à bille selon l'une quelconque des revendications précédentes,
**caractérisé en ce que**
le corps fixe (12) comprend une pièce de fixation (14) formée lors du moulage par injection du matériau, avec une rainure annulaire (15) contre laquelle peut être fixé un soufflet d'étanchéité (16) .

7. Joint à bille selon l'une quelconque des revendications précédentes,
**caractérisé en ce que**
la coque sphérique (4) est encliquetée sur la région de palier (3).
